# EUROPEAN PATENT SPECIFICATION

(11) **EP 4 432 512 B1**
(45) Date of publication and mention of the grant of the patent: **26.08.2026**
(21) Application number: 23872719.2
(22) Date of filing: 29.06.2023
(51) Int. Cl.: H02J 7/82, H02J 7/60, H02J 7/50, G01R 31/382, H01M 10/42, H01M 10/48, G01R 19/165

(54) **BATTERY MANAGEMENT DEVICE FOR BATTERY HAVING VOLTAGE PLATEAU SECTION, AND METHOD FOR CONTROLLING SAME**
BATTERIEVERWALTUNGSVORRICHTUNG FÜR BATTERIE MIT SPANNUNGSPLATEAUABSCHNITT UND VERFAHREN ZUR STEUERUNG DAVON
DISPOSITIF DE GESTION DE BATTERIE POUR BATTERIE AYANT UNE SECTION DE PLATEAU DE TENSION, ET SON PROCÉDÉ DE COMMANDE

(30) Priority: 27.09.2022 KR 20220122260; 17.01.2023 KR 20230006698
(43) Date of publication of application: 18.09.2024
(73) Proprietor: LG Energy Solution, Ltd., Seoul 07335 (KR)
(72) Inventor: PARK, Jeong Seok, Daejeon 34122 (KR); SONG, Youngdoo, Daejeon 34122 (KR); HWANG, Yunseong, Daejeon 34122 (KR)
(74) Representative: BCKIP Part mbB
(86) International application number: PCT/KR2023/009140
(87) International publication number: WO 2024/071593

(56) References cited:
- EP-A1- 3 893 318
- WO-A1-2022/091673
- JP-A- 2013 070 599
- JP-A- 2014 184 752
- JP-A- 2018 060 641
- KR-B1- 102 330 260
- US-A1- 2021 135 298

## Description

### [Technical Field]

The present invention relates to a battery management apparatus and an operating method thereof, and more particularly, to a battery management apparatus for a stable operation of a battery system including a battery having a voltage plateau and an operating method thereof. Further, the invention relates to a battery system.

### [Background Art]

A secondary battery is a battery that can be recharged and reused even after being discharged. The secondary battery can be used as an energy source for small devices such as mobile phones, tablet PCs and vacuum cleaners, and also used as an energy source for medium and large devices such as an energy storage system (ESS) for automobiles and smart grids.

The secondary battery is applied to a system in a form of an assembly such as a battery module in which a plurality of battery cells are connected in series and parallel or a battery pack in which battery modules are connected in series and parallel according to system requirements.

Carbon materials are mainly used as an anode active material of lithium secondary batteries whereas lithium-containing cobalt oxide (LiCoO2) is mainly used as a cathode active material, and lithium-containing manganese oxides (LiMnO2, LiMn2O4, etc.) and lithium-containing nickel oxide (LiNiO2) are also being considered.

Recently, a lithium iron phosphate (LiFePO4)-based compound has been used as a cathode active material for a lithium secondary battery. A lithium iron phosphate (LFP) battery using lithium iron phosphate as a cathode active material is superior in terms of thermal stability and cost efficiency compared to other types of batteries. However, the LFP battery exhibits a plateau characteristic with a voltage plateau section in a charging characteristic curve (correlation curve between open circuit voltage and SOC) and a problem arises that the state of charge (SOC) cannot be accurately estimated in the plateau section.

During operation of a battery system including battery assemblies connected in parallel, if an abnormality occurs in a specific battery assembly, the battery assembly is disconnected from the battery system (parallel connection released) and can be reconnected to the battery system when the abnormality is resolved. Here, the corresponding battery assembly can be reconnected to the battery system if the SOC of the corresponding battery assembly is the same as or very similar to those of other battery assemblies.

However, in the case of a battery system to which an LFP battery is applied, if an abnormality occurs in a specific battery assembly in the voltage plateau section, the battery assembly needs to be fully charged or fully discharged in order to be reconnected to the battery system after the battery assembly is disconnected from the battery system. This is because the SOC of the LFP battery cannot be accurately estimated in the voltage plateau section. Accordingly, a problem arises in that a considerable amount of time is required until the corresponding battery assembly is reconnected to the battery system.

JP 2018 060641 A discloses a power supply device for a vehicle including a first battery, a second battery, a switch that switches the first battery and the second battery between a parallel connected state and a parallel disconnected state, and a switch control unit, wherein the first battery and the second battery are storage elements having a flat region in an SOC-OCV characteristic curve. The switch control unit switches the switch from an opened state to a closed state when the first and the second battery are included in the flat region in the SOC-OCV characteristic.

### [Detailed Description of the Invention]

### [Technical Problem]

To obviate one or more problems of the related art, it is an object of the present invention to provide a battery management apparatus for a stable operation of a battery system including a battery having a voltage plateau.

To obviate one or more problems of the related art, it is a further object of the present invention to provide a control method of the battery management apparatus.

To obviate one or more problems of the related art, it is still another object of the present invention to provide a battery system including the battery management apparatus.

### [Technical Solution]

In order to achieve the above objectives, the present invention provides a battery management apparatus in accordance with claim 1, a a control method in accordance with claim 7, and a battery system in accordance with claim 13.

According to the invention, a battery management apparatus for managing and controlling a battery which is connected in parallel with one or more other batteries may include at least one processor; and a memory configured to store at least one instruction executed by the at least one processor. Preferred embodiments of the invention are set out in the dependent claims.

### [Advantageous Effects]

According to the present invention, operational stability of the battery system can be improved by minimizing disconnection of an abnormal battery in the voltage plateau section.

### [Brief Description of the Drawings]

FIG. 1 is a block diagram of a general energy storage system.
FIG. 2 shows a charging characteristic curve of the LFP battery.
FIG. 3 is a block diagram of a battery system according to embodiments of the present invention.
FIG. 4 is an operation flowchart of a control method of the battery management apparatus according to an embodiment of the present invention.
FIG. 5 is an operation flowchart of a control method of the battery management apparatus according to another embodiment of the present invention.
FIG. 6 is a block diagram of a battery management apparatus according to embodiments of the present invention.

100: battery
200: battery management apparatus
300: upper battery management apparatus
600: battery management apparatus

### [Best Modes for Practicing the Invention]

The present invention may be modified in various forms and have various embodiments, and specific embodiments thereof are shown by way of example in the drawings and will be described in detail below. It should be understood, however, that there is no intent to limit the present invention to the specific embodiments. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a minimum unit that serves to store power and a battery module refers to an assembly in which a plurality of battery cells are electrically connected.

A battery rack refers to a system of a minimum single structure which is assembled by electrically connecting module units, set by a battery manufacturer, and can be monitored and controlled by a battery management apparatus/system (BMS). A battery rack may include several battery modules and a battery protection unit or any other protection device.

A battery bank refers to a group of large-scale battery rack systems configured by connecting several racks in parallel. A bank BMS for a battery bank may monitor and control rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

A battery system controller (BSC) is a top-level control device that controls a battery system including a battery bank or a battery system with a multiple bank level structure.

State of charge (SOC) refers to a current state of charge of a battery, represented in percent points [%], and State of Health (SOH) may be a current condition of a battery compared to its ideal or original conditions, represented in percent points [%].

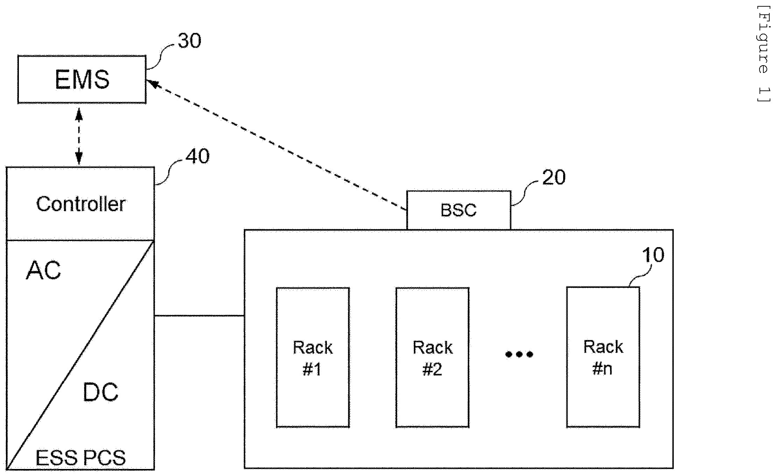

FIG. 1 is a block diagram of a general energy storage system.

In an energy storage system (ESS), typically a battery cell is a minimum unit of storing energy or power. A series/parallel combination of battery cells may form a battery module, and a plurality of battery packs may form a battery rack. In other words, a battery rack can be a minimum unit of a battery system as a series/parallel combination of battery packs. Here, depending on a device or a system in which the battery is used, a battery pack may be referred to as a battery module.

Referring to FIG. 1, a battery rack 10 may include a plurality of battery modules and a battery protection unit (BPU) or any other protection device. The battery rack can be monitored and controlled through a rack BMS(RBMS). The RBMS may monitor a current, a voltage and a temperature, among others, of each battery rack to be managed, calculate a state of charge (SOC) of the battery based on monitoring results, and control charging and discharging of the battery rack.

The battery protection unit (BPU) is a device for protecting the battery rack from an abnormal current and a fault current in the battery rack. The BPU may include a main contactor (MC), a fuse, and a circuit breaker (CB) or a disconnect switch (DS). The BPU may control a battery system rack by rack through on/off controlling the main contactor (MC) based on a control from the Rack BMS. The BPU may also protect the battery rack from a short circuit current using a fuse in the event of a short circuit. As such, the battery system can be controlled through a protection device such as a BPU or a switchgear.

A battery system controller (BSC) 20 is located in each battery section which includes a plurality of batteries, peripheral circuits, and devices to monitor and control objects such as a voltage, a current, a temperature, and a circuit breaker. The battery system controller is an uppermost control apparatus in a bank level battery system including a plurality of battery racks. The battery system controller may also be used as a control apparatus in a battery system having a plurality of bank level structures.

Furthermore, a power conversion system (PCS) 40 installed in each battery section performs charging/discharging based on a charge/discharge command (e.g., a charge or discharge command) from the energy management system (EMS) 30. The power conversion system (PCS) 40 may include a power conversion unit (DC/AC inverter) and a controller. The output of each BPU may be connected to the PCS 40 through a DC bus, and the PCS 40 may be connected to a power grid. In addition, the EMS(or Power Management System (PMS)) 30 may manage the overall energy storage system (ESS).

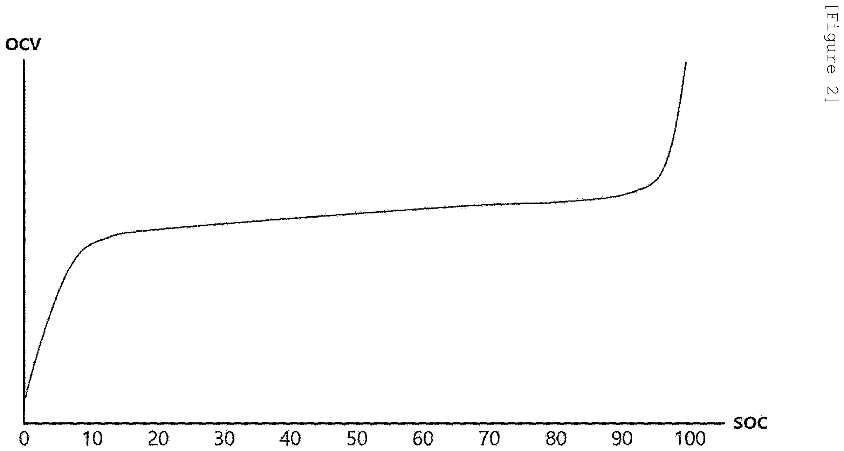

FIG. 2 shows a charging characteristic curve of an LFP battery.

More specifically, FIG. 2 shows a charging characteristic curve of a lithium iron phosphate (LFP) battery using lithium iron phosphate as a cathode active material. The charging characteristic curve represents a correspondence between an open circuit voltage (OCV) and a SOC measured during a battery charging process.

During operation of a battery system, a battery management apparatus may perform balancing control based on SOCs of batteries or reconnecting at least one battery disconnected from the battery system. Here, a method of measuring an open-circuit voltage value of the battery and estimating the SOC of the battery based on the measured open-circuit voltage value is mainly used, in order to calculate the SOC of a battery.

Referring to FIG. 2, the charging characteristic curve of the LFP battery has a voltage plateau in the SOC range of about 10% to about 90%. In the case of an LFP battery having such a plateau characteristic, it is difficult to accurately estimate the SOC in the plateau section, accurate estimation is possible only in a non- plateau section (e.g., a section where the SOC is 90% or more, or a section where the SOC is 10% or less). In other words, in a battery system to which the LFP battery is applied, accurate SOC estimation is possible only in a very limited SOC section.

In FIG. 1, if an abnormality occurs in a specific battery rack among a plurality of battery racks 10 included in a battery system, a parallel connection between the corresponding battery rack and other battery racks may released and the corresponding battery rack may be disconnected from the battery system. When the abnormal state of the corresponding battery rack is resolved by inspection, the battery rack may be reconnected to the battery system. Here, the corresponding battery rack needs to be reconnected to the battery system when the SOCs of the corresponding battery rack and other battery racks are very similar, for stable operation of the battery system.

Here, in the case of battery racks with LFP batteries, battery racks need to be fully charged or fully discharged because accurate estimation of SOC is possible only in non-flat sections (e.g., a section with SOC of 90% or more, or a section with SOC of 10% or less). Thus, it takes a considerable amount of time to reconnect the disconnected battery rack to the battery system.

The present invention is presented to solve this problem and relates to a battery control apparatus and a control method thereof, which minimizes disconnection of an abnormal battery in an exact SOC estimation impossible section thereby stably operating the battery system.

Hereinafter, preferred embodiments according to the present invention will be described in detail with reference to the accompanying drawings.

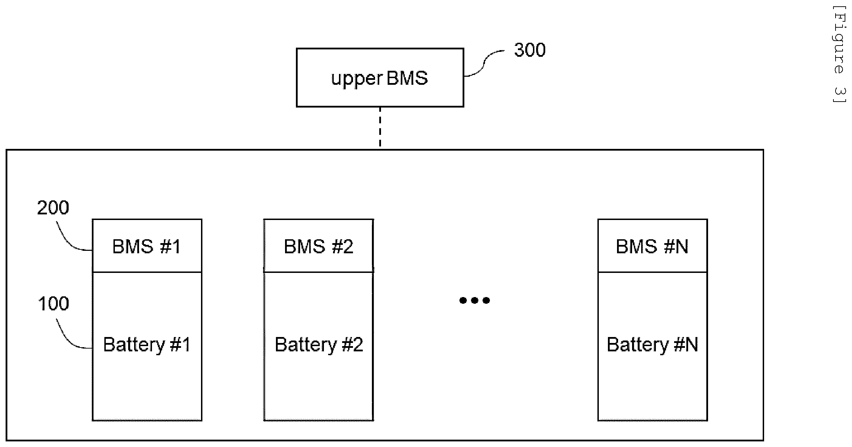

FIG. 3 is a block diagram of a battery system according to embodiments of the present invention.

Referring to FIG. 3, the battery system according to the present invention includes a plurality of batteries 100 and a plurality of battery management systems/apparatuses (BMSs) 200 provided in correspondence to the plurality of batteries, respectively, and for managing and controlling corresponding batteries. The plurality of batteries 100 may be electrically connected to each other in parallel.

In the present invention, the battery 100 may mean a battery assembly. In other words, the battery 100 according to the present invention may correspond to a battery module, a battery pack, a battery rack, or a battery bank.

In embodiments, the battery 100 may correspond to a battery assembly including one or more battery cells (e.g., LFP battery cells) having at least a portion of a voltage plateau section in a charging characteristic curve.

The BMS 200 may manage and control its corresponding battery 100 by collecting state information on the corresponding battery 100 and performing a predefined control operation based on the collected state information. Here, the BMS 200 may control charging and discharging of the battery based on the state information of the battery and diagnose whether the battery cells are out of order.

The battery management apparatus 200 may control a switching device provided at an input/output terminal of the battery 100 to release or reconnect the parallel connection with other batteries.

Each of the plurality of BMSs 200 may be connected to an upper battery management apparatus 300 through a network, transmit battery state information of the battery to the upper battery management apparatus 300, receive control commands from the upper battery management apparatus 300, and operate based on the received control commands. Here, the upper battery management apparatus 300 may correspond to a battery system controller (BSC), an energy management system (EMS), or a power management system (PMS).

Each of the battery management apparatuses 200 may diagnose whether or not each battery has an abnormality based on state information of a corresponding battery. For example, the battery management apparatus 200 may detect a failure occurrence such as a short circuit or ignition, based on state information including at least one of a voltage value, a current value, and a temperature value of the battery.

When an abnormal state occurs in a specific battery, the battery management apparatus 200 corresponding to the abnormal battery may determine whether the SOC of the corresponding battery is within a threshold SOC range predefined as an SOC estimation impossible section. Here, the battery management apparatus 200 may check a voltage value of the battery at the time of detecting the abnormal state of the battery, obtain the SOC corresponding to the checked voltage value through a pre-stored voltage-SOC correlation table, and determine the current SOC of the battery.

The threshold SOC range may be predefined as a section of SOC in which the voltage change relative to SOC change is equal to or less than a predefined threshold value, in a correlation curve depicting a relationship between the SOC and the voltage of the battery. For example, the threshold SOC range may be defined as 5 or more and 95 or less, or 10 or more and 90 or less.

Thereafter, the battery management apparatus 200 may control whether to release the parallel connection between the abnormal battery and other batteries based on whether the SOC of the abnormal battery is within the threshold SOC range.

When the SOC of the abnormal battery is out of a predefined threshold SOC range, the battery management apparatus 200 may controls an input/output switch of the corresponding battery to be in an open state to release the parallel connection with other batteries. In other words, when the abnormal battery is in an SOC estimation possible state, the battery management apparatus 200 may disconnect the abnormal battery from the battery system, and control to reconnect the corresponding battery to the battery system based on the calculated SOC when the abnormal state of the battery is resolved.

When the SOC of the abnormal battery is within the predefined threshold SOC range, the battery management apparatus 200 may maintain the parallel connection between the corresponding battery and other batteries. Here, the battery management apparatus 200 may release the parallel connection with other batteries when the corresponding battery becomes out of the threshold SOC range. In other words, when the abnormal battery is in an SOC estimation impossible state, the battery management apparatus 200 may not immediately disconnect the abnormal battery from the battery system, but disconnect the abnormal battery from the battery system when the abnormal battery becomes an SOC estimation possible state. Accordingly, unnecessary time consumed until the abnormal battery is reconnected to the battery system may be reduced.

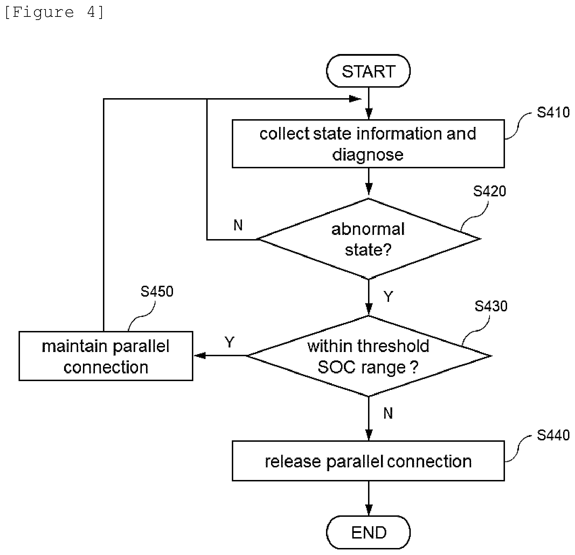

FIG. 4 is an operation flowchart of a control method of the battery management apparatus according to an embodiment of the present invention.

The control method illustrated in FIG. 4 may be performed in a battery management apparatus that manages and controls a battery connected in parallel with other batteries. Here, the battery management apparatus may correspond to a battery management system (BMS) that directly manages a corresponding battery or may correspond to an upper BMS (e.g., a battery system controller (BSC), an energy management system (EMS), or a power management system (PMS)) of the BMS.

The battery management apparatus collects state information of the battery and diagnoses whether the battery is abnormal based on the collected state information (S410). For example, the battery management apparatus collects state information including one or more of a voltage value, a current value, and a temperature value of the battery, and determines whether or not an abnormal state such as occurrence of a short circuit or ignition based on the collected state information.

When an abnormal state occurs in the battery (Y in S420), the battery management apparatus determines whether the SOC of the battery is within a threshold SOC range predefined as an SOC estimation impossible section (S430). Here, the battery management apparatus controls whether to release the parallel connection according to whether the SOC of the battery is within a threshold SOC range.

The threshold SOC range is predefined as a section of SOC in which the voltage change relative to SOC change is equal to or less than a predefined threshold value, in a correlation curve depicting a relationship between the SOC and the voltage of the battery. For example, the threshold SOC range may be defined as 5 or more and 95 or less, or 10 or more and 90 or less.

When the SOC of the battery is out of the predetermined threshold SOC range (N in S430), the battery management apparatus may control an input/output switch of the battery to be in an open state to release the parallel connection between the battery and other batteries (S440). In other words, when the abnormal battery is in an SOC estimation possible state, the battery management apparatus 200 may disconnect the abnormal battery from the battery system.

When the SOC of the battery is within a predetermined threshold SOC range (Y in S430), the battery management apparatus may maintain the parallel connection with other batteries (S450).

Thereafter, the battery management apparatus re-determines whether an abnormal state has occurred in the battery (S410, S420), and if the battery is out of the threshold SOC range (N in S430), the battery management apparatus may release the parallel connection with other batteries (S440).

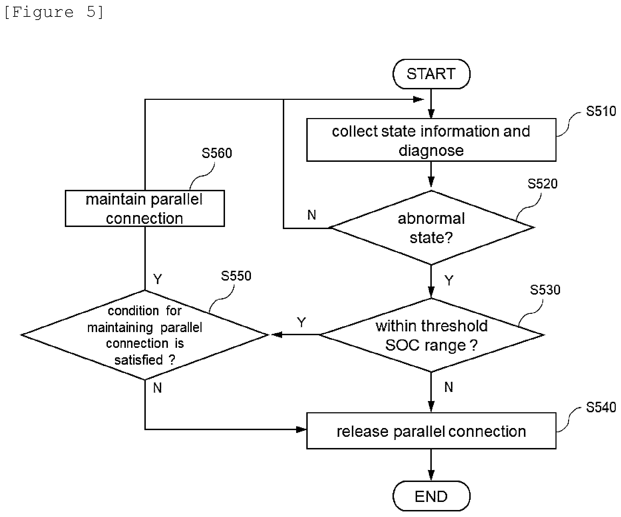

FIG. 5 is an operation flowchart of a control method of the battery management apparatus according to another embodiment of the present invention. The control method shown in FIG. 5 is an embodiment in which a step of deciding a condition for maintaining a parallel connection is added to the control method shown in FIG. 4.

The battery management apparatus collects state information of the battery and diagnoses whether the battery is abnormal based on the collected state information (S510).

When an abnormal state occurs in the battery (Y in S520), the battery management apparatus determines whether the SOC of the battery is within a threshold SOC range predefined as an SOC estimation impossible section (S530).

When the SOC of the battery is out of the predetermined threshold SOC range (N in S530), the battery management apparatus may control an input/output switch of the battery to be in an open state to release the parallel connection with other batteries (S540).

When the SOC of the battery is within the predefined threshold SOC range (Y in S530), the battery management apparatus may determine whether a predefined condition for maintaining a parallel connection is satisfied (S550), wherein the condition for maintaining the parallel connection is predefined based on the state information of the battery, and may control whether to release the parallel connection depending the determination result. Here, the battery management apparatus may release the parallel connection with other batteries (S540) if the condition for maintaining the parallel connection is not satisfied (N in S550), whereas the battery management apparatus may maintain the parallel connection (S560) if the condition for maintaining the parallel connection is satisfied (Y in S550).

The condition for maintaining the parallel connection may include a first condition defined as a state in which a change amount in the cumulative current value of the battery is equal to or less than a predetermined threshold value.

More specifically, when the abnormal battery is within the threshold SOC range (SOC estimation impossible state), the battery management apparatus may check a cumulative current amount of the battery for a predetermined period. When the change amount of cumulative current of the battery exceeds a predefined threshold (the first condition is not satisfied), the parallel connection with other batteries may be released, whereas when the change amount of cumulative current of the battery is less than the predefined threshold (the first condition is satisfied), the parallel connection with other batteries may be maintained.

In other words, even if the battery is in an SOC estimation impossible state (a state within the threshold SOC range) at a time of determining whether an abnormality occurs, the parallel connection with other batteries may be released as the voltage changes due to the cumulative current (the first condition turning to be not satisfied) and the SOC estimation becomes possible afterwards.

The condition for maintaining the parallel connection may include a second condition defined as a battery stable state. In an embodiment, the second condition may be defined as a state in which a state value including at least one of a temperature value, a current value, and a voltage value of the battery is equal to or less than a predefined threshold value. In another embodiment, the second condition may be defined as a state in which a change amount of a state value including at least one of a temperature value, a current value, and a voltage value of the battery is equal to or less than a predefined threshold value.

More specifically, when the abnormal battery is in a state within a threshold SOC range (SOC estimation impossible state), the battery management apparatus may monitor a state value of the battery for a predetermined period of time. If the state value of the battery exceeds a predefined threshold (the second condition is not satisfied), the parallel connection with other batteries may be released, whereas if the state value of the battery is equal to or less than a predefined threshold (the second condition satisfied), the parallel connection with other batteries may be maintained.

In other words, even if the battery is in an SOC estimation impossible state (a state within the threshold SOC range) at a time of determining whether an abnormality occurs, the parallel connection with other batteries may be released if the battery is in an unstable state (e.g., a dangerous state in which the temperature value exceeds a threshold value) (the second condition is not satisfied).

In embodiments, the battery management apparatus may maintain a parallel connection with other batteries if both the first and the second conditions, included in the condition for maintaining the parallel connection, are satisfied, whereas the battery management apparatus may release the parallel connection with other batteries if either one of the first and the second conditions is not satisfied.

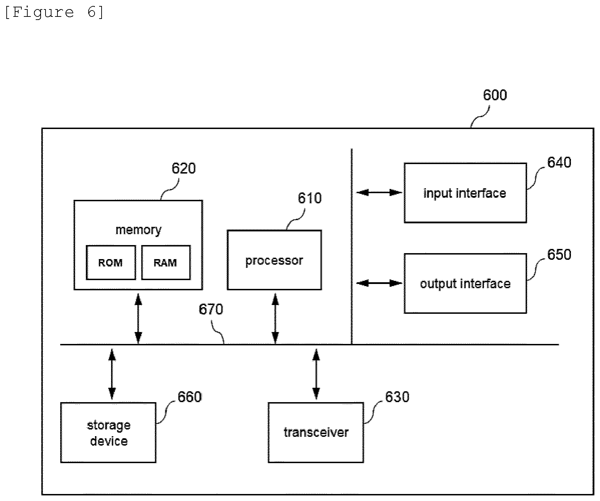

FIG. 6 is a block diagram of a battery management apparatus according to embodiments of the present invention.

The battery management apparatus 600 according to embodiments of the present invention may correspond to an apparatus located in a battery system, which manages and controls a battery connected in parallel with other batteries. For example, the battery control apparatus 600 may correspond to a rack battery management system (RBMS), a battery system controller (BSC), an energy management system (EMS), or a power management system (PMS), or may be implemented by being included in any one of them.

The battery management apparatus 600 includes at least one processor 610, a memory 620 that stores at least one instruction executed by the processor, and a transceiver 630 connected to a network to perform communication.

The at least one instruction includes an instruction to diagnose whether or not the battery is abnormal based on the state information of the battery; and an instruction to, upon the battery determined to be in an abnormal state, control whether to release the parallel connection between the battery and the one or more other batteries based on whether a state of charge (SOC) of the battery is within a threshold SOC range which is predefined as SOC estimation impossible section.

The threshold SOC range is predefined as a section of SOC in which the voltage change relative to SOC change is equal to or less than a predefined threshold value, in a correlation curve depicting a relationship between the SOC and the voltage of the battery.

The instruction to control whether to release the parallel connection may include an instruction to release the parallel connection between the battery and the one or more other batteries when the SOC of the battery is out of the threshold SOC range.

The instruction to control whether to release the parallel connection may include: an instruction to, upon the SOC of the battery being within the threshold SOC range, control whether to release the parallel connection between the battery and the one or more other batteries according to whether a condition for maintaining a parallel connection is satisfied, wherein the condition for maintaining a parallel connection is predefined based on the state information of the battery.

The instruction to control whether to release the parallel connection include an instruction to maintain the parallel connection between the battery and the one or more other batteries in the instance that a first condition is satisfied, wherein the first condition is defined as a state in which a change amount of a cumulative current value of the battery is less than or equal to a predefined threshold value.

The instruction to control whether to release the parallel connection include: an instruction to maintain the parallel connection between the battery and the one or more other batteries in the instance that a second condition is satisfied, wherein the second condition is defined as a state in which a state value including at least one of a temperature value, a current value, and a voltage value of the battery is equal to or less than a predefined threshold value, or defined as a state in which a change amount of the state value is equal to or less than a predefined threshold value.

The instruction to control whether to release the parallel connection include an instruction to release the parallel connection between the battery and the one or more other batteries when the condition for maintaining a parallel connection is not satisfied.

The battery management apparatus 600 may further include an input interface 640, an output interface 650, a storage device 660, and the like. Respective components included in the battery control apparatus 600 may be connected by a bus 670 to management with each other.

Here, the processor 610 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the scope of the present invention described in the appending claims.

## Claims

1. A battery management apparatus (200, 600) for managing and controlling a battery (100) which is connected in parallel with one or more other batteries (100), the apparatus (200, 600) comprising:
at least one processor (610); and
a memory (620) configured to store at least one instruction executed by the at least one processor (610),
wherein the at least one instruction includes:
an instruction to diagnose whether the battery (100) is abnormal based on state information of the battery (100); and
an instruction to, upon determining that the battery (100) is in an abnormal state, control to maintain the parallel connection between the battery (100) and the one or more other batteries (100) or a release thereof, based on whether a state of charge, SOC, of the battery (100) is within a threshold SOC range which is predefined as SOC estimation impossible section,
wherein the threshold SOC range is predefined as a plateau section of SOC within a correlation curve depicting a relationship between the SOC and a voltage of the battery (100), wherein in said section of SOC, the voltage change relative to SOC change is equal to or less than a predefined threshold value;
wherein the instruction to control to maintain the parallel connection or the release thereof includes: an instruction to, upon the SOC of the battery (100) being within the threshold SOC range, control the parallel connection between the battery (100) and the one or more other batteries (100) or the release thereof according to whether a condition for maintaining a parallel connection is satisfied, wherein the condition for maintaining a parallel connection is predefined based on the state information of the battery (100).

2. The battery management apparatus of claim 1, wherein the instruction to control to maintain the parallel connection or the release thereof includes:
an instruction to release the parallel connection between the battery (100) and the one or more other batteries (100) when the SOC of the battery (100) is out of the threshold SOC range.

3. The battery management apparatus (200, 600) of any claims 1 or 2, wherein the instruction to control to maintain the parallel connection or the release thereof includes:
an instruction to maintain the parallel connection between the battery (100) and the one or more other batteries in the instance that a first condition is satisfied, wherein the first condition is defined as a state in which a change amount of a cumulative current value of the battery (100) for a predetermined period is less than or equal to a predefined threshold value.

4. The battery management apparatus (200, 600) of any of claims 1 and 2, wherein the instruction to control to maintain the parallel connection or the release thereof includes:
an instruction to maintain the parallel connection between the battery (100) and the one or more other batteries in the instance that a second condition is satisfied, wherein the second condition is defined as a state in which the state value including at least one of a temperature value, a current value, and a voltage value of the battery (100) is equal to or less than a first predefined threshold value, or defined as a state in which a change amount of the state value is equal to or less than a second predefined threshold value.

5. The battery management apparatus (200, 600) of claim 1, wherein the instruction to control to maintain the parallel connection or the release thereof includes:
an instruction to release the parallel connection between the battery (100) and the one or more other batteries (100) when the condition for maintaining a parallel connection is not satisfied.

6. A control method performed by a battery control apparatus (200, 600) that manages and controls a battery (100) which is connected in parallel with one or more other batteries (100), the method comprising:
diagnosing whether the battery (100) is abnormal based on state information of the battery (100); and
upon determining that the battery (100) is in an abnormal state, controlling to maintain the parallel connection between the battery (100) and the one or more other batteries (100) or a release thereof based on whether a state of charge, SOC, of the battery (100) is within a threshold SOC range which is predefined as SOC estimation impossible section,
wherein the threshold SOC range is predefined as a plateau section of SOC within a correlation curve depicting a relationship between the SOC and a voltage of the battery (100), wherein in said section of SOC, the voltage change relative to SOC change is equal to or less than a predefined threshold value;
wherein the controlling to maintain the parallel connection or the release thereof includes:
upon the SOC of the battery (100) being within the threshold SOC range, controlling the parallel connection between the battery (100) and the one or more other batteries (100) or the release thereof according to whether a condition for maintaining a parallel connection is satisfied, wherein the condition for maintaining a parallel connection is predefined based on the state information of the battery (100).

7. The method of claim 6, wherein the controlling to maintain the parallel connection or the release thereof includes releasing the parallel connection between the battery (100) and the one or more other batteries (100) when the SOC of the battery (100) is out of the threshold SOC range.

8. The method of any of claims 6 and 7, wherein the controlling to maintain the parallel connection or the release thereof includes:
maintaining the parallel connection between the battery (100) and the one or more other batteries (100) in the instance that a first condition is satisfied, wherein the first condition is defined as a state in which a change amount of a cumulative current value of the battery (100) for a predetermined period is less than or equal to a predefined threshold value.

9. The method of any of claims 6 and 7, wherein the controlling to maintain the parallel connection or the release thereof includes:
maintaining the parallel connection between the battery (100) and the one or more other batteries (100) in the instance that a second condition is satisfied, wherein the second condition is defined as a state in which the state value including at least one of a temperature value, a current value, and a voltage value of the battery (100) is equal to or less than a first predefined threshold value, or defined as a state in which a change amount of the state value is equal to or less than a second predefined threshold value.

10. The method of claim 6, wherein the controlling to maintain the parallel connection or the release thereof includes:
releasing the parallel connection between the battery (100) and the one or more other batteries (100) when the condition for maintaining a parallel connection is not satisfied.

11. A battery system, comprising:
a plurality of batteries (100) connected in parallel; and
a plurality of battery management apparatus (200, 600) provided in correspondence to the plurality of batteries (100), respectively and configured to manage and control respective corresponding batteries (100),
wherein the battery management apparatus (200, 600) is configured to diagnose whether the battery (100) is abnormal based on state information of the battery (100) and upon determining that the battery (100) is in an abnormal state, to control to maintain the parallel connection between the battery (100) and the one or more other batteries (100) or a release thereof based on whether a state of charge, SOC, of the battery (100) is within a threshold SOC range which is predefined as SOC estimation impossible section,
wherein the threshold SOC range is predefined as a plateau section of SOC within a correlation curve depicting a relationship between the SOC and a voltage of the battery (100), wherein in said section of SOC, the voltage change relative to SOC change is equal to or less than a predefined threshold value;
wherein the battery management apparatus (200, 600) is further configured to, upon the SOC of the battery (100) being within the threshold SOC range, control the parallel connection between the battery (100) and the one or more other batteries (100) or the release thereof according to whether a condition for maintaining a parallel connection is satisfied, wherein the condition for maintaining a parallel connection is predefined based on the state information of the battery (100).

12. The battery system of claim 11, wherein the battery management apparatus is further configured to release the parallel connection between the battery (100) and the one or more other batteries (100) when the SOC of the battery (100) is out of the threshold SOC range.

13. The battery system of any of claims 11 or 12, wherein the battery management apparatus (200, 600) is further configured to maintain the parallel connection between the battery (100) and the one or more other batteries (100) in the instance that a first condition is satisfied, wherein the first condition is defined as a state in which a change amount of a cumulative current value of the battery (100) for a predetermined period is less than or equal to a predefined threshold value.

14. The battery system of any of claims 11 or 12, wherein the battery management apparatus (200, 600) is further configured to maintain the parallel connection between the battery (100) and the one or more other batteries (100) in the instance that a second condition is satisfied, wherein the second condition is defined as a state in which the state value including at least one of a temperature value, a current value, and a voltage value of the battery (100) is equal to or less than a first predefined threshold value, or defined as a state in which a change amount of the state value is equal to or less than a second predefined threshold value.

15. The battery system of claim 11, wherein the battery management apparatus (200, 600) is further configured to release the parallel connection between the battery (100) and the one or more other batteries (100) when the condition for maintaining a parallel connection is not satisfied.

## Patentansprüche

1. Batterieverwaltungsvorrichtung (200, 600) zum Verwalten und Steuern einer Batterie (100), die parallel mit einer oder mehreren anderen Batterien (100) verbunden ist, wobei die Vorrichtung (200, 600) umfasst:
mindestens einen Prozessor (610); und
einen Speicher (620), der konfiguriert ist, um mindestens eine Anweisung zu speichern, die von dem mindestens einen Prozessor (610) ausgeführt wird,
wobei die mindestens eine Anweisung umfasst:
eine Anweisung zum Diagnostizieren, ob die Batterie (100) anormal ist, basierend auf Zustandsinformationen der Batterie (100); und
eine Anweisung zum Steuern, bei Bestimmen, dass die Batterie (100) in einem anormalen Zustand ist, einer Aufrechterhaltung der Parallelverbindung zwischen der Batterie (100) und der einen oder den mehreren anderen Batterien (100) oder eine Freigabe davon, basierend darauf, ob ein Ladezustand, SOC, der Batterie (100) innerhalb eines Schwellen-SOC-Bereichs liegt, der als unmöglicher Abschnitt für eine SOC-Schätzung vordefiniert ist,
wobei der Schwellen-SOC-Bereich als Plateau-Abschnitt des SOC innerhalb einer Korrelationskurve vordefiniert ist, die eine Beziehung zwischen dem SOC und einer Spannung der Batterie (100) darstellt, wobei in dem Abschnitt des SOC die Spannungsänderung relativ zu der SOC-Änderung gleich oder kleiner als ein vordefinierter Schwellenwert ist;
wobei die Anweisung zum Steuern der Parallelverbindung oder der Freigabe davon umfasst: eine Anweisung zum Steuern, wenn der SOC der Batterie (100) innerhalb des Schwellen-SOC-Bereichs liegt, der Parallelverbindung zwischen der Batterie (100) und der einen oder den mehreren anderen Batterien (100) oder der Freigabe davon, je nachdem, ob eine Bedingung zum Aufrechterhalten einer Parallelverbindung erfüllt ist, wobei die Bedingung zum Aufrechterhalten einer Parallelverbindung basierend auf den Zustandsinformationen der Batterie (100) vordefiniert ist.

2. Batterieverwaltungsvorrichtung nach Anspruch 1, wobei die Anweisung zum Steuern der Aufrechterhaltung der Parallelverbindung oder der Freigabe davon umfasst:
eine Anweisung zum Freigeben der Parallelverbindung zwischen der Batterie (100) und der einen oder den mehreren anderen Batterien (100), wenn der SOC der Batterie (100) außerhalb des Schwellen-SOC-Bereichs liegt.

3. Batterieverwaltungsvorrichtung (200, 600) nach einem der Ansprüche 1 oder 2,
wobei die Anweisung zum Steuern der Aufrechterhaltung der Parallelverbindung oder der Freigabe davon umfasst:
eine Anweisung zum Aufrechterhalten der Parallelverbindung zwischen der Batterie (100) und der einen oder den mehreren anderen Batterien in dem Fall, dass eine erste Bedingung erfüllt ist, wobei die erste Bedingung als ein Zustand definiert ist, in dem ein Änderungsbetrag eines kumulativen Stromwerts der Batterie (100) für eine vorbestimmte Periode kleiner oder gleich einem vordefinierten Schwellenwert ist.

4. Batterieverwaltungsvorrichtung (200, 600) nach einem der Ansprüche 1 und 2,
wobei die Anweisung zum Steuern der Aufrechterhaltung der Parallelverbindung oder der Freigabe davon umfasst:
eine Anweisung zum Aufrechterhalten der Parallelverbindung zwischen der Batterie (100) und der einen oder den mehreren anderen Batterien in dem Fall, dass eine zweite Bedingung erfüllt ist, wobei die zweite Bedingung als ein Zustand definiert ist, in dem der Zustandswert, der mindestens einen von einem Temperaturwert, einem Stromwert und einem Spannungswert der Batterie (100) umfasst, gleich oder kleiner als ein erster vordefinierter Schwellenwert ist, oder als ein Zustand definiert ist, in dem ein Änderungsbetrag des Zustandswerts gleich oder kleiner als ein zweiter vordefinierter Schwellenwert ist.

5. Batterieverwaltungsvorrichtung (200, 600) nach Anspruch 1,
wobei die Anweisung zum Steuern der Aufrechterhaltung der Parallelverbindung oder der Freigabe davon umfasst:
eine Anweisung zum Freigeben der Parallelverbindung zwischen der Batterie (100) und der einen oder den mehreren anderen Batterien (100), wenn die Bedingung zum Aufrechterhalten einer Parallelverbindung nicht erfüllt ist.

6. Steuerverfahren, das von einer Batteriesteuervorrichtung (200, 600) durchgeführt wird, die eine Batterie (100) verwaltet und steuert, die parallel mit einer oder mehreren anderen Batterien (100) verbunden ist, wobei das Verfahren umfasst:
Diagnostizieren, ob die Batterie (100) anormal ist, basierend auf Zustandsinformationen der Batterie (100); und
Steuern, bei Bestimmen, dass die Batterie (100) in einem anormalen Zustand ist, einer Aufrechterhaltung der Parallelverbindung zwischen der Batterie (100) und der einen oder den mehreren anderen Batterien (100) oder eine Freigabe davon, basierend darauf, ob ein Ladezustand, SOC, der Batterie (100) innerhalb eines Schwellen-SOC-Bereichs liegt, der als unmöglicher Abschnitt für eine SOC-Schätzung vordefiniert ist,
wobei der Schwellen-SOC-Bereich als Plateau-Abschnitt des SOC innerhalb einer Korrelationskurve vordefiniert ist, die eine Beziehung zwischen dem SOC und einer Spannung der Batterie (100) darstellt, wobei in dem Abschnitt des SOC die Spannungsänderung relativ zu der SOC-Änderung gleich oder kleiner als ein vordefinierter Schwellenwert ist;
wobei das Steuern der Aufrechterhaltung der Parallelverbindung oder der Freigabe davon umfasst:
wenn der SOC der Batterie (100) innerhalb des Schwellen-SOC-Bereichs liegt, Steuern der Parallelverbindung zwischen der Batterie (100) und der einen oder den mehreren anderen Batterien (100) oder der Freigabe davon, je nachdem, ob eine Bedingung zum Aufrechterhalten einer Parallelverbindung erfüllt ist, wobei die Bedingung zum Aufrechterhalten einer Parallelverbindung basierend auf den Zustandsinformationen der Batterie (100) vordefiniert ist.

7. Verfahren nach Anspruch 6,
wobei das Steuern der Aufrechterhaltung der Parallelverbindung oder der Freigabe davon ein Freigeben der Parallelverbindung zwischen der Batterie (100) und der einen oder den mehreren anderen Batterien (100) umfasst, wenn der SOC der Batterie (100) außerhalb des Schwellen-SOC-Bereichs liegt.

8. Verfahren nach einem der Ansprüche 6 und 7,
wobei das Steuern der Aufrechterhaltung der Parallelverbindung oder der Freigabe davon umfasst:
Aufrechterhalten der Parallelverbindung zwischen der Batterie (100) und der einen oder den mehreren anderen Batterien (100) in dem Fall, dass eine erste Bedingung erfüllt ist, wobei die erste Bedingung als ein Zustand definiert ist, in dem ein Änderungsbetrag eines kumulativen Stromwerts der Batterie (100) für eine vorbestimmte Periode kleiner oder gleich einem vordefinierten Schwellenwert ist.

9. Verfahren nach einem der Ansprüche 6 und 7,
wobei das Steuern der Aufrechterhaltung der Parallelverbindung oder der Freigabe davon umfasst:
Aufrechterhalten der Parallelverbindung zwischen der Batterie (100) und der einen oder den mehreren anderen Batterien (100) in dem Fall, dass eine zweite Bedingung erfüllt ist, wobei die zweite Bedingung als ein Zustand definiert ist, in dem der Zustandswert, der mindestens einen von einem Temperaturwert, einem Stromwert und einem Spannungswert der Batterie (100) umfasst, gleich oder kleiner als ein erster vordefinierter Schwellenwert ist, oder als ein Zustand definiert ist, in dem ein Änderungsbetrag des Zustandswerts gleich oder kleiner als ein zweiter vordefinierter Schwellenwert ist.

10. Verfahren nach Anspruch 6, wobei das Steuern der Aufrechterhaltung der Parallelverbindung oder der Freigabe davon umfasst:
Freigeben der Parallelverbindung zwischen der Batterie (100) und der einen oder den mehreren anderen Batterien (100), wenn die Bedingung zum Aufrechterhalten einer Parallelverbindung nicht erfüllt ist.

11. Batteriesystem, umfassend:
eine Vielzahl von Batterien (100), die parallel verbunden sind; und
eine Vielzahl von Batterieverwaltungsvorrichtungen (200, 600), die jeweils entsprechend der Vielzahl von Batterien (100) bereitgestellt und konfiguriert sind, um jeweilige entsprechende Batterien (100) zu verwalten und zu steuern,
wobei die Batterieverwaltungsvorrichtung (200, 600) konfiguriert ist, um basierend auf Zustandsinformationen der Batterie (100) zu diagnostizieren, ob die Batterie (100) anormal ist, und um bei Bestimmen, dass die Batterie (100) in einem anormalen Zustand ist, eine Aufrechterhaltung der Parallelverbindung zwischen der Batterie (100) und der einen oder den mehreren anderen Batterien (100) oder eine Freigabe davon zu steuern, basierend darauf, ob ein Ladezustand, SOC, der Batterie (100) innerhalb eines Schwellen-SOC-Bereichs liegt, der als unmöglicher Abschnitt für eine SOC-Schätzung vordefiniert ist,
wobei der Schwellen-SOC-Bereich als Plateau-Abschnitt des SOC innerhalb einer Korrelationskurve vordefiniert ist, die eine Beziehung zwischen dem SOC und einer Spannung der Batterie (100) darstellt, wobei in dem Abschnitt des SOC die Spannungsänderung relativ zu der SOC-Änderung gleich oder kleiner als ein vordefinierter Schwellenwert ist;
wobei die Batterieverwaltungsvorrichtung (200, 600) ferner konfiguriert ist zum Steuern, wenn der SOC der Batterie (100) innerhalb des Schwellen-SOC-Bereichs liegt, der Parallelverbindung zwischen der Batterie (100) und der einen oder den mehreren anderen Batterien (100) oder der Freigabe davon, je nachdem, ob eine Bedingung zum Aufrechterhalten einer Parallelverbindung erfüllt ist, wobei die Bedingung zum Aufrechterhalten einer Parallelverbindung basierend auf den Zustandsinformationen der Batterie (100) vordefiniert ist.

12. Batteriesystem nach Anspruch 11,
wobei die Batterieverwaltungsvorrichtung ferner konfiguriert ist, um die Parallelverbindung zwischen der Batterie (100) und der einen oder den mehreren anderen Batterien (100) freizugeben, wenn der SOC der Batterie (100) außerhalb des Schwellen-SOC-Bereichs liegt.

13. Batteriesystem nach einem der Ansprüche 11 oder 12, wobei die Batterieverwaltungsvorrichtung (200, 600) ferner konfiguriert ist, um die Parallelverbindung zwischen der Batterie (100) und der einen oder den mehreren anderen Batterien (100) in dem Fall aufrechtzuerhalten, dass eine erste Bedingung erfüllt ist, wobei die erste Bedingung als ein Zustand definiert ist, in dem ein Änderungsbetrag eines kumulativen Stromwerts der Batterie (100) für eine vorbestimmte Periode kleiner oder gleich einem vordefinierten Schwellenwert ist.

14. Batteriesystem nach einem der Ansprüche 11 oder 12,
wobei die Batterieverwaltungsvorrichtung (200, 600) ferner konfiguriert ist, um die Parallelverbindung zwischen der Batterie (100) und der einen oder den mehreren anderen Batterien (100) in dem Fall aufrechtzuerhalten, dass eine zweite Bedingung erfüllt ist, wobei die zweite Bedingung als ein Zustand definiert ist, in dem der Zustandswert, der mindestens einen von einem Temperaturwert, einem Stromwert und einem Spannungswert der Batterie (100) umfasst, gleich oder kleiner als ein erster vordefinierter Schwellenwert ist, oder als ein Zustand definiert ist, in dem ein Änderungsbetrag des Zustandswerts gleich oder kleiner als ein zweiter vordefinierter Schwellenwert ist.

15. Batteriesystem nach Anspruch 11, wobei
die Batterieverwaltungsvorrichtung (200, 600) ferner konfiguriert ist, um die Parallelverbindung zwischen der Batterie (100) und der einen oder den mehreren anderen Batterien (100) freizugeben, wenn die Bedingung zum Aufrechterhalten einer Parallelverbindung nicht erfüllt ist.

## Revendications

1. Dispositif de gestion de batterie (200, 600) pour gérer et commander une batterie (100) connectée en parallèle à une ou plusieurs autres batteries (100), ledit dispositif (200, 600) comprenant :
au moins un processeur (610) ; et
une mémoire (620) configurée pour stocker au moins une instruction exécutée par ledit au moins un processeur (610),
où la ou les instructions comprennent :
une instruction pour diagnostiquer si la batterie (100) est anormale sur la base d'informations d'état de la batterie (100) ; et
une instruction pour commander, s'il est déterminé que la batterie (100) est dans un état anormal, le maintien de la connexion en parallèle entre la batterie (100) et la ou les autres batteries (100) ou l'interruption de celle-ci, selon que l'état de charge, SOC, de la batterie (100) est compris ou non dans une plage de SOC critique prédéfinie comme section d'impossibilité d'estimation de SOC,
où la plage de SOC critique est prédéfinie comme section de plateau de SOC comprise dans une courbe de corrélation décrivant une relation entre le SOC et une tension de la batterie (100), où, dans ladite section de SOC, la variation de tension par rapport à la variation de SOC est égale ou inférieure à une valeur critique prédéfinie ;
où l'instruction de commande de la connexion en parallèle ou de l'interruption de celle-ci comprend : une instruction pour commander, si le SOC de la batterie (100) se trouve dans la plage de SOC critique, la connexion en parallèle entre la batterie (100) et la ou les autres batteries (100) ou l'interruption de celle-ci selon qu'une condition de maintien d'une connexion en parallèle est satisfaite ou non, ladite condition de maintien d'une connexion en parallèle étant prédéfinie sur la base des informations d'état de la batterie (100).

2. Dispositif de gestion de batterie selon la revendication 1, où l'instruction de commande pour maintenir la connexion en parallèle ou interrompre celle-ci comprend : une instruction pour interrompre la connexion en parallèle entre la batterie (100) et la ou les autres batteries (100) si le SOC de la batterie (100) est hors de la plage de SOC critique.

3. Dispositif de gestion de batterie (200, 600) selon la revendication 1 ou la revendication 2,
où l'instruction de commande pour maintenir la connexion en parallèle ou interrompre celle-ci comprend :
une instruction pour maintenir la connexion en parallèle entre la batterie (100) et la ou les autres batteries dans le cas où une première condition est satisfaite, ladite première condition étant définie comme un état où une valeur d'état comme un état où une grandeur de variation d'une valeur de courant cumulé de la batterie (100) pendant une période prédéterminée est inférieure ou égale à une valeur critique prédéfinie.

4. Dispositif de gestion de batterie (200, 600) selon la revendication 1 ou la revendication 2,
où l'instruction de commande pour maintenir la connexion en parallèle ou interrompre celle-ci comprend :
une instruction pour maintenir la connexion en parallèle entre la batterie (100) et la ou les autres batteries dans le cas où une deuxième condition est satisfaite, ladite deuxième condition étant définie comme un état où la valeur d'état comprenant au moins une valeur parmi une valeur de température, une valeur de courant et une valeur de tension de la batterie (100) est égale ou inférieure à une première valeur critique prédéfinie, ou définie comme un état où une grandeur de variation de la valeur d'état est égale ou inférieure à une deuxième valeur critique prédéfinie.

5. Dispositif de gestion de batterie (200, 600) selon la revendication 1,
où l'instruction de commande pour maintenir la connexion en parallèle ou interrompre celle-ci comprend :
une instruction pour interrompre la connexion en parallèle entre la batterie (100) et la ou les autres batteries (100) si la condition de maintien d'une connexion en parallèle n'est pas satisfaite.

6. Procédé de commande exécuté par un dispositif de commande de batterie (200, 600) gérant et commandant une batterie (100) connectée en parallèle à une ou plusieurs autres batteries (100), ledit procédé comprenant les étapes suivantes :
le diagnostic si la batterie (100) est anormale ou non sur la base d'informations d'état de la batterie (100) ; et,
s'il est déterminé que la batterie (100) est dans un état anormal, la commande de maintien de la connexion en parallèle entre la batterie (100) et la ou les autres batteries (100) ou d'interruption de celle-ci selon que l'état de charge, SOC, de la batterie (100) est compris ou non dans une plage de SOC critique prédéfinie comme section d'impossibilité d'estimation de SOC,
où la plage de SOC critique est prédéfinie comme section de plateau de SOC comprise dans une courbe de corrélation décrivant une relation entre le SOC et une tension de la batterie (100), où, dans ladite section de SOC, la variation de tension par rapport à la variation de SOC est égale ou inférieure à une valeur critique prédéfinie ;
où la commande de maintien de la connexion en parallèle ou de l'interruption de celle-ci comprend :
si le SOC de la batterie (100) se trouve dans la plage de SOC critique, la commande de la connexion en parallèle entre la batterie (100) et la ou les autres batteries (100) ou l'interruption de celle-ci selon qu'une condition de maintien d'une connexion en parallèle est satisfaite ou non, ladite condition de maintien d'une connexion en parallèle étant prédéfinie sur la base des informations d'état de la batterie (100).

7. Procédé selon la revendication 6,
où la commande pour maintenir la connexion en parallèle ou interrompre celle-ci comprend l'interruption de la connexion en parallèle entre la batterie (100) et la ou les autres batteries (100) si le SOC de la batterie (100) est hors de la plage de SOC critique.

8. Procédé selon la revendication 6 ou la revendication 7,
où la commande pour maintenir la connexion en parallèle ou interrompre celle-ci comprend : le maintien de la connexion en parallèle entre la batterie (100) et la ou les autres batteries (100) dans le cas où une première condition est satisfaite, ladite première condition étant définie comme un état où une grandeur de variation d'une valeur de courant cumulée de la batterie (100) pendant une période prédéterminée est inférieure ou égale à une valeur critique prédéfinie.

9. Procédé selon la revendication 6 ou la revendication 7,
où la commande pour maintenir la connexion en parallèle ou interrompre celle-ci comprend : le maintien de la connexion en parallèle entre la batterie (100) et la ou les autres batteries (100) dans le cas où une deuxième condition est satisfaite, ladite deuxième condition étant définie comme un état où la valeur d'état comprenant au moins une valeur parmi une valeur de température, une valeur de courant et une valeur de tension de la batterie (100) est égale ou inférieure à une première valeur critique prédéfinie, ou définie comme un état où une grandeur de variation de la valeur d'état est égale ou inférieure à une deuxième valeur critique prédéfinie.

10. Procédé selon la revendication 6,
où la commande pour maintenir la connexion en parallèle ou interrompre celle-ci comprend : l'interruption de la connexion en parallèle entre la batterie (100) et la ou les autres batteries (100) si la condition de maintien d'une connexion en parallèle n'est pas satisfaite.

11. Système de batterie, comprenant :
une pluralité de batteries (100) connectées en parallèle ; et
une pluralité de dispositifs de gestion de batterie (200, 600) disposés en correspondance avec la pluralité de batteries (100) respectives et configurés pour gérer et commander des batteries correspondantes respectives (100),
où le dispositif de gestion de batterie (200, 600) est configuré pour diagnostiquer si la batterie (100) est anormale sur la base d'informations d'état de la batterie (100) et, s'il est déterminé que la batterie (100) est dans un état anormal, pour commander le maintien de la connexion en parallèle entre la batterie (100) et la ou les autres batteries (100) ou une interruption de celle-ci selon que l'état de charge, SOC, de la batterie (100) est compris ou non dans une plage de SOC critique prédéfinie comme section d'impossibilité d'estimation de SOC,
où la plage de SOC critique est prédéfinie comme section de plateau de SOC comprise dans une courbe de corrélation décrivant une relation entre le SOC et une tension de la batterie (100), où, dans ladite section de SOC, la variation de tension par rapport à la variation de SOC est égale ou inférieure à une valeur critique prédéfinie ;
où le dispositif de gestion de batterie (200, 600) est en outre configuré pour commander, si le SOC de la batterie (100) se trouve dans la plage de SOC critique, la connexion en parallèle entre la batterie (100) et la ou les autres batteries (100) ou l'interruption de celle-ci selon qu'une condition de maintien d'une connexion en parallèle est satisfaite ou non, ladite condition de maintien d'une connexion en parallèle étant prédéfinie sur la base des informations d'état de la batterie (100).

12. Système de batterie selon la revendication 11,
où le dispositif de gestion de batterie est en outre configuré pour interrompre la connexion en parallèle entre la batterie (100) et la ou les autres batteries (100) si le SOC de la batterie (100) est hors de la plage de SOC critique.

13. Système de batterie selon la revendication 11 ou la revendication 12,
où le dispositif de gestion de batterie (200, 600) est en outre configuré pour maintenir la connexion en parallèle entre la batterie (100) et la ou les autres batteries (100) dans le cas où une première condition est satisfaite, ladite première condition étant définie comme un état où une grandeur de variation d'une valeur de courant cumulé de la batterie (100) pendant une période prédéterminée est inférieure ou égale à une valeur critique prédéfinie.

14. Système de batterie selon la revendication 11 ou la revendication 12,
où le dispositif de gestion de batterie (200, 600) est en outre configuré pour maintenir la connexion en parallèle entre la batterie (100) et la ou les autres batteries (100) dans le cas où une deuxième condition est satisfaite, ladite deuxième condition étant définie comme un état où la valeur d'état comprenant au moins une valeur parmi une valeur de température, une valeur de courant et une valeur de tension de la batterie (100) est égale ou inférieure à une première valeur critique prédéfinie, ou définie comme un état où une grandeur de variation de la valeur d'état est égale ou inférieure à une deuxième valeur critique prédéfinie.

15. Système de batterie selon la revendication 11,
où le dispositif de gestion de batterie (200, 600) est en outre configuré pour interrompre la connexion en parallèle entre la batterie (100) et la ou les autres batteries (100) si la condition de maintien d'une connexion en parallèle n'est pas satisfaite.
